# EUROPÄISCHE PATENTANMELDUNG

(11) **EP 1 916 483 A2**
(43) Veröffentlichungstag der Anmeldung: **30.04.2008**
(21) Anmeldenummer: 07019534.2
(22) Anmeldetag: 05.10.2007
(51) Int. Cl.: F24D 3/16

(54) **Modulares Paneel für Fussbodenheizung**

(30) Priorität: 25.10.2006 IT BZ20060044
(71) Anmelder: EUROTHERM S.P.A., 39010 Appiano (Bolzano) (IT)
(72) Erfinder: Cleto, Pezzei, 39057 Appiano (BZ) (IT)
(74) Vertreter: Oberosler, Ludwig

(57) **Zusammenfassung**

Modulares Paneel zur Erstellung von Böden mit Fußbodenheizung welches geeignet ist direkt auf dem Estrich oder auf einem aus Metallprofilen (5) erstelltem Rost welcher eventuell auf höhenverstellbaren Abstandsfüßen aufliegt verlegt zu werden, wobei das Paneel (1) aus einer Masse eines Gemisches von inertem Werkstoff, von zementartigem und/oder synthetischem Bindemittel und von bekannten Zuschlägen welche geeignet sind die mechanischen und/oder die wärmeleitenden Eigenschaften zu verbessern und von eventuellen Füllmitteln besteht und dass dieses Gemisch in Formen gegossen oder eingespritzt wird innerhalb welcher das Rohr (2) für den Durchfluss des flüssigen Heiz-/Kühlmediums vorgesehen ist welches eine in die Masse eingebettete Position einnimmt wobei die Rohrenden (2a) seitlich oder an der Unterseite des Paneels (1) hervorragen.

## Beschreibung

Die Erfindung bezieht sich auf ein tragendes ausgeformtes modulares Element, welches ein Rohr für den Durchfluss eines Heiz- oder Kühlmediums enthält, wobei dieses Element mit anderen wesentlich identischen Elementen seitlich anbaubar und verbindbar ist um durch zweckmäßige Verbindung der inneren Rohre, bzw. durch Anschluss an die Vorlauf- und Rücklaufrohre eine Fußbodenheizung zu schaffen welche für unterschiedliche Arten von Bodenbelägen und für die Schaffung der Dehnungsfugen vorgefertigt ist.

Aus der EP 0075143 A1 ist ein Fußboden bekannt welcher aus Baueinheiten aus wärmeleitendem und/oder wärmespeicherndem Kunststoff welcher in einer äußeren wannenförmigen metallischen Bewehrung enthalten ist, zusammengesetzt ist. Diese Baueinheiten sind auf Abstandhaltern verlegt welche auf dem Estrich aufliegen um einen Zwischenraum zu schaffen durch welchen z.B. Luft durchgeführt wird und/oder in welchem Elektroleitungen, Rohre, usw. verlegt werden können. Unterhalb dieser Baueinheiten ist die Installation der Rohre für Heizungs- oder Kühlwasser auf vorgefertigten wärmedämmenden Paneelen vorgesehen. Der Zwischenraum zwischen den Baueinheiten und dem Estrich kann mit wärmedämmendem Material ausgefüllt werden. Die Herstellung und das Verlegen der Baueinheiten der obgenannten Art sind kostenaufwändig weil der Aufbau der einzelnen Bauelemente, wegen des Zusammenbaues mehrerer, einzeln angefertigter, Elemente welche einzeln beim Verlegen zusammengebaut und verbunden werden müssen, komplex ist, weiters umfasst der Rohrkreislauf mehrere Bauelemente wodurch eventuelle nachträgliche Änderungen umständlich sind. Weiters bewirkt die Gesamtstärke des wannenförmigen Elementes und des Bauelementes welches das Rohr enthält und unterhalb angebracht ist, öfters Installationsprobleme.

Aus der EP 0463034 B1 ist ein Bauelement bekannt welches aus einem wannenförmigen Grundelement besteht welches ein Blech mit wesentlich senkrecht ausgerichteten Aussteifungsflügeln enthält und einen Deckel aufweist. Die Wanne und die Aussteifungsflügel sind so ausgeformt dass sie ein, an eine Heizungs- oder Kühlanlage angeschlossenes, Rohr aufnehmen können.

Aus der DE 29909140 U1 ist ein Bauelement bekannt welches aus einer Metallwanne besteht welche mit einem Material von der Art für die Herstellung von Unterböden gefüllt ist und Heizungs- bzw. Kühlrohre enthält. An der Unterseite dieser Wanne ist ein Isolierpaneel angebracht. Die in diesen letzten zwei Patentanmeldungen angeführten Bauelemente weisen den Nachteil auf, dass sie mit umlaufender Dehnungsfuge verlegt werden was eine Einschränkung betreffend die Verlegung des Fußbodenbelages bewirkt weil eine Übereinstimmung zwischen den Fugen des Fußbodenbelages und jenen der Bauelemente vorausgesetzt wird.

Aus dem IT-Patentansuchen VI2004A000069 ist ein Bauelement bekannt welches aus einem wärmeisolierendem vorgeformten Paneel besteht um Heizungs/Kühlrohre aufzunehmen auf welchem eine Abdeckung, bestehend aus mindestens einer Metallplatte mit Zwischenlage mindestens eines Polyethylenlaminates, vorgesehen. Diese Bauelemente haben den Nachteil dass sie wenig ausgesteift und stabil sind und somit wenig geeignet für eine zum Estrich beabstandete Verlegung sind, weiters erstreckt sich auch in diesem Fall der Rohrkreislauf über mehrere modulare Paneele wodurch eventuelle nachtägliche Änderungen erschwert werden.

Aus dem IT-Patentansuchen MI2004A002423 ist ein Bauelement für Fußböden bekannt welches wesentlich aus einer Wanne besteht welche ein Füllmaterial mit einem plattenförmigen Armierungselement enthält und einen Deckel aufweist. Diese paneelartigen Bauelemente sind ausschließlich für eine zum Estrich beabstandete Verlegung geeignet, sie werden in eine steife, gitterförmige Struktur aus Profilen verlegt welche auf einstellbaren Abstandsfüßen befestigt sind, dabei entstehen um jedes Element umlaufende Dehnungsfugen, weiters ist die Herstellung dieser Bauelemente relativ aufwändig.

Die Erfindung stellt sich die Aufgabe ein Bauelement der vorher beschriebenen Art zu schaffen welches für den Bau von Fußböden mit Fußbodenheizung geeignet ist, eine steife und formstabile Struktur hat, einfach zusammenbaubar ist, zeitsparend unter Verwertung von inertem oder wiederverwertetem, preisgünstigem Werkstoff herstellbar ist, mühelos sei es direkt auf dem Estrich oder vom Estrich beabstandet auf eigener Trägerstruktur verlegbar ist, wobei weiters, nach erfolgtem Verlegen, die einfache Abmontage einzelner Bauelemente und Eingriffe am Rohrkreislauf möglich sind.

Zur Lösung dieser Aufgabe schlägt die Erfindung ein Bauelement vor welches wesentlich aus einem Gemisch aus inertem Werkstoff mit zementartigem oder synthetischem Bindemittel oder aus einem Gemisch eines Granulats aus wiederverwertetem Kunststoff und aus synthetischen Kunstharzen, hergestellt wird; diese Gemische können in eine Form gegossen oder gespritzt werden aus welcher sie, nach Aushärtung, entformt werden. Vor dem Giesen oder Einspritzen der Masse in die Form, kann diese mit einer, z.B. metallischen, Bewehrung versehen werden an welcher das Heiz-/Kühlrohr gehalten wird. Diese Bewehrung samt Rohr wird in die Masse welche das Paneel bildet eingegossen, dabei ragen die Rohrenden unterhalb oder seitlich aus dem modularen Paneel hervor.

Erfindungsgemäß weist das modulare Paneel einen einfachen oder ausgeformten Flansch auf welcher am Umfang vorsteht und geeignet ist eine Verbindung durch Überlagerung oder Eingreifen am entsprechenden Flansch des anliegenden Paneels herzustellen. Diese Verbindung kann durch Zapfen oder Schrauben gesichert sein welche in entsprechende, eventuell mit Dübel oder Buchsen ausgestattete, Bohrungen eingesetzt sind, diese Bohrungen sind an den vorspringenden Flanschen in übereinstimmenden Positionen vorgesehen, es ist weiters eine Verbindung unter den umlaufenden Flanschen mittels Kleber, Mörtel oder dünnflüssigem Zement möglich. Vorteilhafterweise haben die besagten Flanschen eine Stärke welche der Hälfte der Stärke des Paneels entspricht und bilden somit, zusammen mit dem aufliegenden oder eingehängten Flansch des anliegenden Paneels, die selbe Stärke der verbundenen Paneele.

Der auf diese Weise zusammengesetzte Fußboden ist über seine gesamte Fläche formstabil auch wenn die einzelnen Paneele nicht mit ihrer gesamten unteren Fläche oder dem entsprechenden Umfangsbereich auf dem Estrich aufliegen. Die Erfindung schließt jedoch nicht aus dass, umlaufend entlang dem Umfang der Paneele, Nuten vorgesehen sind in welche entsprechende Federn eingesetzt werden können; in diesem Fall werden die Paneele einfach durch seitliches Zusammenschieben verbunden.

Die Verbindung der Rohre der einzelnen modularen Paneele kann im seitlichen Verbindungsbereich der Paneele erfolgen indem im Bereich der seitlich vorstehenden Rohrenden Ausschmiegungen vorgesehen sind. Insbesondere im Fall einer vom Estrich distanzierten Verlegung der Paneele kann die Verbindung der Rohre an der Unterseite im Zwischenraum erfolgen; in diesem Fall ragen die Rohrenden an der Unterseite der Paneele hervor.

Das Verlegen der erfindungsgemäßen Paneele kann auf einer gitterartigen Struktur aus vorher direkt auf dem Estrich verlegten Profilen erfolgen, ohne auszuschließen dass die besagte Gitterstruktur auf bekannten höhenverstellbaren, auf dem Estrich aufgestellten, Abstandsfüßen verlegt sein kann. Der durch diese bekannte Verlegeart gebildete Zwischenraum kann auf bekannte Weise z.B. für die Verlegung von Kabel, Rohre und/oder Kanäle genutzt werden.

Die erfindungsgemäßen Paneele bilden eine Grundstruktur welche für das Verlegen jeglicher Art von Bodenbelag geeignet ist, die Dehnungsfugen sind einfach realisierbar indem im Bereich der Verbindungsfugen zwischen den modularen Paneelen das erforderliche Spiel vorgesehen wird ohne eine gegenseitige Verankerung der Paneele auszuführen. Zwischen den gegenseitigen Auflageflächen der umfangseitig abstehenden Flanschen der modularen Paneele können Schichten oder Dichtungen aus elastischen Werkstoff eingesetzt werden. Die Bewehrung des erfindungsgemäßen Paneels kann gitterförmig oder rostartig sein oder aus einem ausgeformten Blech bestehen, die besagten Bewehrungen können so ausgeführt sein dass sie das Rohr mit oder ohne Verwendung von Befestigungsklips oder Schellen aufnehmen; es wird nicht ausgeschlossen die Funktionstüchtigkeit der Bewehrung durch bekannte in das, das Paneel bildende, Gemisch vor dem Guss eingearbeitete faser- oder drahtförmige Werkstoffe zu ersetzen oder zu unterstützen.

Um die Ränder und/oder die Kanten und/oder jene Bereiche welche besonderen Belastungen ausgesetzt sind zu verstärken, kann das Paneel in den entsprechenden Bereichen mit Verstärkungsprofilen, Gitter oder Verstärkungsblechen versehen sein.

Die Unterseite des modularen Paneels kann nachträglich mit einer wärmedämmenden Schicht versehen werden, ohne dass ausgeschlossen wird dass diese Schicht in der Guss- oder Spritzphase angebracht wird indem sie in die Form eingelegt wird oder durch Einspritzen eines aufschäumenden Kunststoffes erzeugt wird.

Die Erfindung wird anschließend anhand einiger in den beigelegten Zeichnungen schematisch dargestellter erfindungsgemäßer modularer Paneele näher erklärt, dabei erfüllen die Zeichnungen rein erklärenden, nicht begrenzenden Zweck.

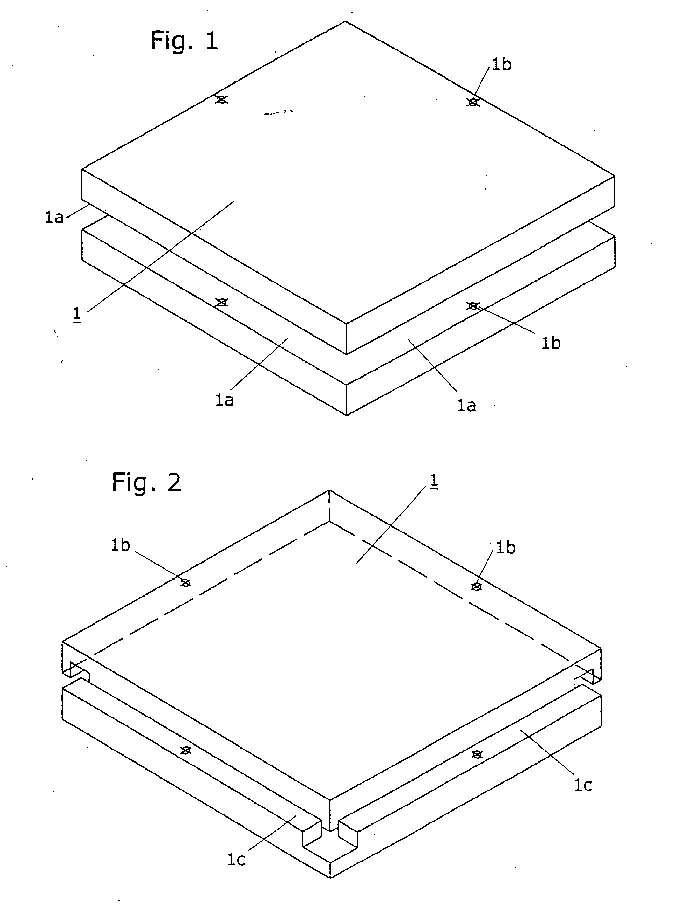

Die Fig. 1 ist eine perspektivische Darstellung eines modularen erfindungsgemäßen Paneels welches einen einfachen am Umfang umlaufenden durch Überlappung verbindbaren Flansch aufweist.

Die Fig. 2 ist eine perspektivische Darstellung eines modularen erfindungsgemäßen Paneels welches einen am Umfang umlaufenden durch gegenseitiges Eingreifen verbindbaren Flansch aufweist.

Die Fig. 3 zeigt in perspektivischer Darstellung einen Teil eines erfindungsgemäßen modularen Paneels welches seitlich im Bereich der vorstehenden Rohrenden des im Paneel eingebetteten Heizungs-/Kühlrohres eine entsprechende Ausschmiegung aufweist.

Die Fig. 4 zeigt einen Querschnitt durch ein erfindungsgemäßes modulares Paneel von der in Fig. 2 dargestellten Art, die Schnittebene verläuft entlang einem der Abschnitte des in die, das Paneel bildende, Masse eingebettete Rohres dessen Enden an der Unterseite des Paneels vorstehen.

Die Fig. 5 zeigt teilweise im Schnitt das Detail der mit Abstand zum Estrich mittels U-Profile verlegten erfindungsgemäßen modularen Paneele, die Verbindung der zwei anliegenden Paneele erfolgt über einfache am Umfang umlaufende Flanschen welche sich überlappen und mittels Schraube oder Zapfen befestigt sind, die Verbindung zwischen den Rohrenden der beiden Paneele erfolgt im Bereich des Abstandsprofils, der Zwischenraum zwischen Estrich und Paneele ist von wärmedämmendem Material ausgefüllt.

Die modularen Paneele 1 für die Schaffung eines Fußbodens mit Fußbodenheizung, welcher direkt auf den Estrich 8 verlegt ist oder in distanzierter Position auf einer Roststruktur aus Abstandsprofilen 5 welche gegebenenfalls auf höhenverstellbaren bekannten Füßen aufliegen, verlegt ist, haben vorzugsweise quadratische oder rechteckige Form. Erfindungsgemäß sind die besagten modularen Paneele pritzen einer Masse von der Art zur Herstellung von Unterböden und somit vorwiegend aus inertem Material, aus zementartigem und/oder synthetischem Bindemittel , aus eventuellen Zuschlägen und Füller welche die mechanischen und/oder die wärmeleitenden Eigenschaften des Werkstoffes verbessern, hergestellt; es wird jedoch nicht der Einsatz von Mischungen aus synthetischen Harzen vermengt mit Granulaten aus wiederverwerteten Kunststoffen ausgeschlossen. Die mechanische Festigkeit und die Formstabilität der Paneele können durch Faserelemente (Glasfaser, Kohlenstofffasern) oder durch drahtförmige Elemente (Drahtstücke aus Metall oder aus Kunststoff) welche in das Gemisch eingestreut sind und/oder durch eine einlagige oder doppellagige rost- oder gitterartige Bewehrung 3 oder durch eine Bewehrung aus gestrecktem, ausgestanztem oder gelochtem und tiefgezogenem Blech verbessert werden. Im Falle einer Bewehrung kann das in die, das Paneel bildende, Masse eingebettete Rohr 2 für den Durchfluss des Heiz- oder Kühlmittels an dieser eingesetzt und/oder an dieser mittels Schellen oder bekannter Klips 3a befestigt sein.

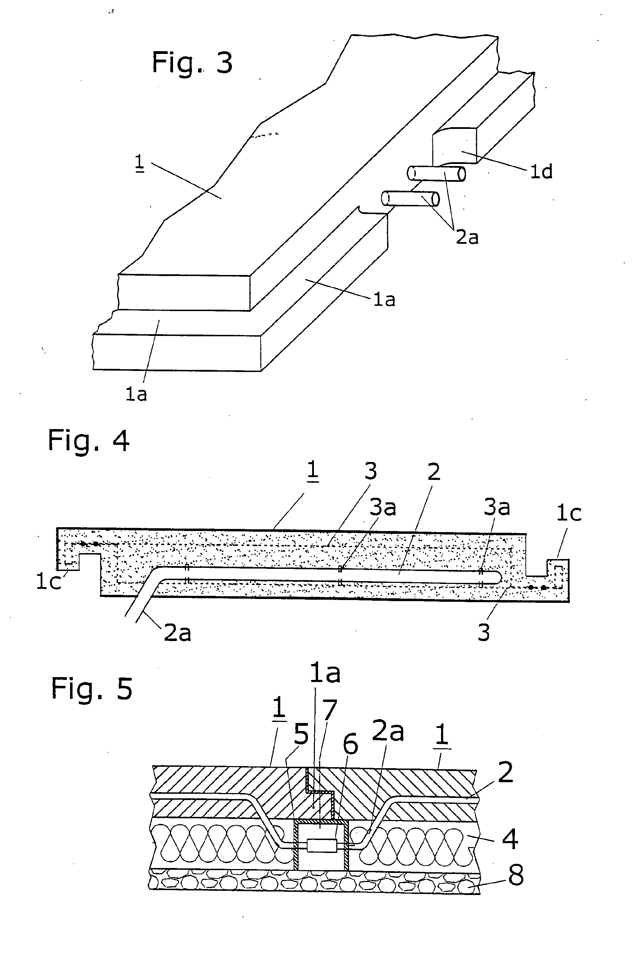

Die Enden 2a des Rohres 2 können seitlich (Fig. 3) oder von der Unterseite aus dem Paneel 1 ragen (Fig. 4, 5). Im Falle dass die Enden 2a des Rohres 2 seitlich hervorragen, können diese beide an der selben Seite nahe nebeneinander oder voneinander distanziert angeordnet sein, am Paneel können im entsprechenden Bereich Ausschmiegungen 1d vorgesehen sein, es wird nicht ausgeschlossen dass die einzelnen Enden an unterschiedlichen Seiten hervorragen. Die Verbindung zwischen den Rohrenden 2a gegeneinander anliegender Paneele oder zwischen den Rohrenden 2a und den Vorlauf- und Rücklaufrohren der Anlage, sind mittels bekannter Kupplungselemente 6 hergestellt.

Das modulare Paneel selbst kann an der Unterseite mit einer wärmedämmenden Schicht versehen sein welche nach der Fertigung des Paneels oder während dessen Fertigungsphase durch Gießen oder durch Formpressen angebracht werden kann oder welche durch Einspritzen eines aufschäumenden Kunststoffes in die Gussform oder in die Pressform, gefertigt werden kann.

Die Verbindungsflanschen 1a, 1c welche umlaufend vom Umfang der modularen Paneele 1 abstehen können erfindungsgemäß unterschiedliche Form und unterschiedlichen Querschnitt aufweisen um eine Verbindung durch einfache Überlappung (Fig. 5) zu ermöglichen, die Flanschen können auch Rillen oder vorstehende Rippen 1c aufweisen um eine formschlüssige Steckverbindung zu bilden. Die Verbindung zwischen den modularen Paneelen 1 kann durch Zapfen oder Schrauben 7 gesichert werden welche an den umlaufenden Flanschen 1a, 1c in entsprechende, mit Dübel oder Buchsen z.B. aus Kunststoff versehene, Bohrungen 1b eingesetzt sind.

Die Erfindung schließt nicht die Anwendung von Klebern, Mörtel oder Zementmilch aus um die Verbindung zwischen den Paneelen 1 zu sichern, wobei natürlich Dehnungsfugen vorgesehen werden indem zwischen den Paneelen ein gewisses Spiel vorgesehen ist in welches eventuell Schichten oder Dichtungen aus elastischem Werkstoff eingesetzt werden welche eine Ausgleichbewegung zwischen den verlegten Paneelen 1 ermöglichen.

Im Falle dass die modularen Paneele 1 auf, aus Metallprofilen 5 gebildeten Roste verlegt werden welche eventuell auf bekannte Art auf höhenverstellbaren Abstandsfüßen welche auf dem Estrich 8 aufliegen, verlegt werden, kann der Zwischenraum zwischen den Paneelen 1 und dem Estrich 8 für das Verlegen von Kabel, Rohre, Abflüsse, Klimatisierungskanäle und dergleichen und/oder für das Verlegen einer Wärmedämmschicht 4 genutzt werden.

Die obere Fläche der modularen Paneele 1 ist erfindungsgemäß für das direkte Verlegen jedes beliebigen Bodenbelages, von der aufgeklebten, von der verankerten oder von der schwimmenden Art, geeignet.

Die Erfindung schließt nicht aus dass, im Falle einer durch Zapfen oder Schrauben 7 realisierten Verbindung, zwischen den Verbindungsflächen eine Schicht elastischen Werkstoffes verlegt wird um eventuelle Spiele und Unregelmäßigkeiten auszugleichen. Im Falle der formschlüssigen Verbindung zwischen den umlaufenden Flanschen, kann die Geometrie der Steckverbindung derart ausgebildet sein dass angewinkelte Flächen vorgesehen sind welche ein Annähern zwischen den zusammengesetzten Paneelen begünstigen.

Eventuell können auf dem, aus zusammengesetzten modularen erfindungsgemäßen Paneelen zusammengesetzten Boden, vor dem Verlegen des Bodenbelages, bekannte Produkte, z.B. der selbstnivellierenden Art welche mit dem, die Paneele bildenden, Werkstoff ausgezeichnet binden, ausgebracht werden.

## Patentansprüche

1. Modulares Paneel zur Erstellung von Böden mit Fußbodenheizung welches geeignet ist direkt auf dem Estrich oder auf einem aus Metallprofilen (5) erstelltem Rost welcher eventuell auf höhenverstellbaren Abstandsfüßen aufliegt verlegt zu werden, **dadurch gekennzeichnet, dass** das Paneel (1) aus einer Masse eines Gemisches von inertem Werkstoff, von zementartigem und/oder synthetischem Bindemittel und von bekannten Zuschlägen welche geeignet sind die mechanischen und/oder die wärmeleitenden Eigenschaften zu verbessern und von eventuellen Füllmitteln besteht und dass dieses Gemisch in Formen gegossen oder eingespritzt wird innerhalb welcher das Rohr (2) für den Durchfluss des flüssigen Heiz-/Kühlmediums vorgesehen ist welches eine in die Masse eingebettete Position einnimmt wobei die Rohrenden (2a) seitlich oder an der Unterseite des Paneels (1) hervorragen.

2. Modulares Paneel gemäß Anspruch 1, **dadurch gekennzeichnet, dass** das Paneel (1) aus einer Masse bestehend aus einem Gemisch von Granulat aus eventuell wiederverwertetem Kunststoff, aus spezifischen chemischen Bindemitteln und aus Zuschlägen welche geeignet sind die mechanischen und verarbeitungstechnischen Eigenschaften zu verbessern und bestehend aus Füllstoffen eventuell von der inerten Art zwecks Verbesserung der Wärmeleitfähigkeit und/oder der Wärmespeicherfähigkeit.

3. Modulares Paneel gemäß Anspruch 1 oder 2, **dadurch gekennzeichnet, dass** eingebettet in die, das Paneel bildende, Masse eine metallische oder aus Kunststoff bestehende, einfache oder mehrfache, Bewehrung (3) welche sich in einer einzigen Ebene erstreckt oder wiederholt mehrere parallele zueinander beabstandete Ebenen durchdringt wobei sie gegebenenfalls den Großteil des Querschnittes des Paneels (1) einnimmt, vorgesehen ist, dass diese Bewehrung (3) die Form eines Rostes eines, Gitters, eines gestreckten Bleches, eines gelochten verformten Bleches oder eines gelochten und verformten Kunststofflaminates hat und dass an dieser oder zwischen dieser Bewehrung das Rohr (2) eingesetzt und/oder befestigt ist.

4. Modulares Paneel gemäß Anspruch 1 oder 2, **dadurch gekennzeichnet, dass** der Mischung mineralische oder synthetische faserförmige Werkstoffe und/oder metallische oder aus synthetischem Werkstoff hergestellte Drahtstücke gestreut beigemischt werden.

5. Modulares Paneel gemäß Anspruch 1 oder 2, **dadurch gekennzeichnet, dass** das Paneel mit am Umfang umlaufenden Flanschen (1a, 1c) ausgestattet ist welche einen einfachen Querschnitt ohne Rillen oder vorstehende Rippen (1a) zwecks Bildung einer Verbindung durch einfache Überlappung aufweisen oder einen Querschnitt (1c) aufweisen welcher eine formschlüssige gegenseitige Steckverbindung ermöglicht.

6. Modulares Paneel gemäß den Ansprüchen 1, 2 und 5, **dadurch gekennzeichnet, dass** an den Flanschen (1a, 1c) Bohrungen (1b) für den Einsatz von Zapfen oder Schrauben (7) vorgesehen sind welche geeignet sind die Verbindung zwischen den Paneelen zu sichern und dass diese Bohrungen (1b) mit Dübel oder Buchsen versehen sein können.

7. Modulares Paneel gemäß den Ansprüchen 1 und 2, **dadurch gekennzeichnet, dass** die Verbindung zwischen den Paneelen (1), bzw. zwischen den umlaufenden vorstehenden Flanschen (1a, 1c), mittels Kleber, Mörtel oder Zementmilch erfolgt.

8. Modulares Paneel gemäß den Ansprüchen 1 und 2, **dadurch gekennzeichnet, dass** die Enden (2a) des in die Masse des Paneels (1) eingebetteten Rohres (2) seitlich aus dem Paneel beide aus der selben Seite oder aus verschiedenen Seiten hervorragen und dass entsprechend dieser Rohrenden (2a) eine Ausschmiegung (1d) vorgesehen ist.

9. Modulares Paneel gemäß den Ansprüchen 1 und 2, **dadurch gekennzeichnet, dass** die Enden (2a) des in die Masse des Paneels eingebetteten Rohres (2) an der Unterseite hervorragen.

10. Modulares Paneel gemäß den Ansprüchen 1 oder 2, **dadurch gekennzeichnet, dass** die Flächen der umlaufenden Flanschen (1a, 1c) welche sich gegenseitig berühren mit einer Schicht oder mit einer Dichtung aus elastischem Werkstoff versehen sein können und dass diese Flächen einen zur Senkrechten angewinkelten Verlauf haben können.
